# EUROPÄISCHE PATENTSCHRIFT

(11) **EP 3 287 401 B1**
(45) Veröffentlichungstag und Bekanntmachung des Hinweises auf die Patenterteilung: **15.04.2020**
(21) Anmeldenummer: 17183555.6
(22) Anmeldetag: 27.07.2017
(51) Int. Cl.: B65H 54/58, B65H 67/056

(54) **HASPELWECHSELVORRICHTUNG UND HASPELWECHSELVERFAHREN**
REEL CHANGE DEVICE AND REEL CHANGE METHOD
DISPOSITIF DE CHANGEMENT DE DÉVIDOIR ET PROCÉDÉ DE CHANGEMENT DE DÉVIDOIR

(30) Priorität: 22.08.2016 DE 102016115497
(43) Veröffentlichungstag der Anmeldung: 28.02.2018
(73) Patentinhaber: B. Braun Avitum AG, 34212 Melsungen (DE)
(72) Erfinder: KÄSTNER, Falk, 01900 Bretnig-Hauswalde (DE)
(74) Vertreter: Winter, Brandl, Fürniss, Hübner, Röss, Kaiser, Polte - Partnerschaft mbB

(56) Entgegenhaltungen:
- EP-A2- 0 113 323
- EP-A2- 2 261 158
- WO-A1-86/05468
- DE-A1- 3 318 115
- DE-A1- 19 800 484
- DE-T2- 69 821 760
- JP-A- H10 194 606

## Beschreibung

Die vorliegende Erfindung betrifft eine Haspelwechselvorrichtung, welche zum Aufhaspeln/ Aufwickeln von aus einem aus einer Spinneinrichtung austretenden (Hohl-)Faserstrang vorgesehen ist. Außerdem betrifft die Erfindung ein Haspelwechselverfahren zum Aufhaspeln von Faserbündeln in einer derartigen Haspelwechselvorrichtung.

Aus dem Stand der Technik ist es bekannt, Hohlfaserbündel für eine Herstellung von Dialysefiltern zu verwenden. Dialysefilter werden grundsätzlich in verschiedenen extrakorporalen Blutbehandlungsverfahren wie beispielsweise der Hämodialyse, der Hämofiltration oder der Hämodiafiltration eingesetzt. Zur Herstellung von Dialysefiltern wird zunächst ein kontinuierlich aus einer Spinnanlage/ -einrichtung austretender Hohlfaserstrang auf rotierende Haspeln bzw. Haspelräder aufgewickelt/ aufgehaspelt. Sobald eine rotierende Haspel bzw. ein rotierendes Haspelrad vollständig aufgewickelt ist, wird der aufgewickelte Hohlfaserstrang von dem Haspelrad abgenommen und mit einer Folie umwickelt, welche unter anderem einer engen, das heißt nahe aneinander liegenden Fixierung der Hohlfasern zueinander dient. Anschließend werden die Hohlfasern auf eine gewünschte Länge abgeschnitten und in eine zylindrische Filterkartusche eingeführt/ in ein Filtergehäuse eingebracht/ gesteckt. Die umwickelte Folie kann nun wieder entfernt werden.

In anderen Worten wird bei der Herstellung eines Hohlfaserfiltermoduls zunächst ein kontinuierlich aus einer Spinnanlage austretender Hohlfaserstrang zu einem Hohlfaserbündel zusammengefasst. Wird dieser Hohlfaserstrang auf ein Haspelrad aufgewickelt, kann über eine Anzahl von Haspelumdrehungen N eine Anzahl von Hohlfasern H, welche sich in dem Hohlfaserbündel befinden, bestimmt werden (H = 2 x N). Liegt an der Haspel bzw. dem Haspelrad die gewünschte Anzahl an Hohlfasern vor, muss die Haspel bzw. das Haspelrad gewechselt werden. Dies geschieht mit Hilfe einer Haspelwechselvorrichtung/ eines Haspelwechselverfahrens.

Aus dem Stand der Technik sind dabei bereits verschiedene manuell oder automatisiert arbeitende Haspelwechselvorrichtungen mit zugehörigen Haspelwechselverfahren bekannt.

Beispielsweise ist es bekannt, neben einer Spinneinrichtung/ -maschine in einer (Hohl-) Faseraustrittsrichtung einen Haspelbock vorzusehen, auf welchem eine Haspel bzw. ein Haspelrad montiert/ angebracht ist. Ein Faserstrang wird dabei zunächst auf das Haspelrad aufgewickelt. Nach Beendigung des Aufwickelvorgangs wird das vollständig aufgewickelte Haspelrad manuell von dem Haspelbock abgenommen und durch ein leeres Haspelrad ersetzt. Sobald das leere Haspelrad an dem Haspelbock montiert ist, kann der Faserstrang wieder aufgewickelt werden. In der Zwischenzeit wird der kontinuierlich austretende bzw. entstehende Faserstrang in den Abfall gesaugt. Dieses manuelle Haspelwechselverfahren hat somit zum einen den Nachteil, dass ein hoher Faserstrangverlust /-ausschuss/ -abfall entsteht, und zum anderen, dass für einen schnellen Haspelwechsel zwei manuelle Anwender bzw. Bediener erforderlich sind.

Außerdem ist aus der WO 2008/067934 A2 eine vollautomatisiert arbeitende Haspelwechselvorrichtung bekannt. In dieser wird ein austretender Faserstrang kontinuierlich und abwechselnd auf zwei balkenartige Haspeln, welche an einem gemeinsamen Haspelträger montiert sind, aufgewickelt. Die balkenartigen Haspeln sind dabei parallel nebeneinander und um eine gemeinsame Drehachse rotierbar angeordnet. Bei einem Haspelwechsel werden die balkenartigen Haspeln dabei um diese gemeinsame Drehachse um 180° gedreht. Während ein Aufwickeln an der einen balkenartigen Haspel erfolgt, kann der aufgewickelte Hohlfaserstrang von der anderen balkenartigen Haspel abgenommen bzw. geerntet werden. Die Haspelvorrichtung der WO 2008/067934 A2 hat jedoch den Nachteil, dass sie in technischer Hinsicht äußerst komplex aufgebaut und nur vollautomatisiert betreibbar ist. Außerdem gelingt es nicht, den Faserstrang beim Umlegen von der einen balkenartigen Haspel auf die andere balkenartige Haspel auf Spannung zu halten, so dass zusätzlich ein vorgeschalteter Fadenpuffer notwendig ist, um den kontinuierlich aus der Spinnanlage austretenden Faserstrang auf Spannung zu halten.

Haspelwechselvorrichtungen gemäß dem Oberbegriff des Anspruchs 1 sind aus der WO 86/05468 A1, der DE 33 18 115 A1 und der DE 198 00 484 A1 bekannt.

Vor diesem Hintergrund ist es die Aufgabe der vorliegenden Erfindung, die Nachteile aus dem Stand der Technik zu vermeiden oder wenigstens zu mildern. Insbesondere besteht die Aufgabe der vorliegenden Erfindung darin, eine Haspelwechselvorrichtung und ein Haspelwechselverfahren bereitzustellen, welche eine einfache und effektive Handhabung, insbesondere im Hinblick auf ein kontinuierliches Aufwickeln von (Hohl-) Fasersträngen und im Hinblick auf ein anschließendes Abnehmen von aufgewickelten (Hohl-) Faserbündeln, ermöglichen und sich sowohl für einen manuellen als auch für einen automatisierten Betrieb eignen. Es soll somit ein einfaches und effektives Haspelwechselhandling zum (Auf-) Wickeln von Hohlfasersträngen /-bündeln bereitgestellt werden.

Diese Aufgabe wird durch eine Haspelwechselvorrichtung mit den Merkmalen des Anspruchs 1 und ein Haspelwechselverfahren mit den Merkmalen des Anspruchs 6 gelöst. Vorteilhafte Ausführungsformen und Weiterbildungen sind in den Unteransprüchen beansprucht und/oder nachfolgend erläutert.

Die Erfindung betrifft zunächst eine Haspelwechselvorrichtung, welche zum, insbesondere kontinuierlichen, Aufhaspeln von Faserbündeln, insbesondere Hohlfaserbündeln, aus einem, vorzugsweise kontinuierlich, aus einer Spinneinrichtung austretenden Faserstrang vorgesehen ist und insbesondere einer Herstellung von Dialysefiltern dient, mit zumindest einem ersten und einem zweiten Haspelträger, an welche jeweils eine, insbesondere zum Aufwickeln des Faserstrangs geeignete, Haspel, insbesondere ein Haspelrad, angeordnet ist und welche in zumindest einer ersten und einer zweiten Führungseinrichtung verschiebbar aufgenommen und geführt sind, so dass die beiden Haspeln in einer Austrittsrichtung des Faserstrangs hintereinander positionierbar sind, um bei einem Haspelwechsel ein direktes Umlegen des Faserstrangs von der ersten, an dem ersten Haspelträger angeordneten, Haspel auf die zweite, an dem zweiten Haspelträger angeordneten, Haspel zu ermöglichen.

Vorzugsweise sind die zumindest zwei Führungseinrichtungen dabei jeweils zumindest abschnittsweise nahebei einer, von einer Austrittsrichtung des Faserstrangs aufgespannten, vertikalen Ebene verlaufend angeordnet.

Unter einem Aufhaspeln von Faserbündeln ist insbesondere ein Aufwickeln eines Faserstrangs an einer Haspel bzw. einem Haspelrad zu verstehen. Unter einer Haspel ist ein Gegenstand bzw. ein Hilfsmittel zu verstehen, welcher/ welches zum Auf- und Abwickeln von Fasersträngen geeignet bzw. vorbereitet ist. Vorzugsweise wird in der erfindungsgemäßen Haspelvorrichtung eine radartige Drehhaspel eingesetzt, welche als Haspelrad bezeichnet wird. Unter einer Spinneinrichtung ist erfindungsgemäß insbesondere eine (Spinn-) Anlage oder (Spinn-) Maschine zu verstehen, welche einer Herstellung von kontinuierlich austretenden Fasersträngen/ Hohlfasersträngen dient.

In der erfindungsgemäßen Haspelwechselvorrichtung sind zwei Haspelträger, nämlich ein erster Haspelträger und ein zweiter Haspelträger, vorgesehen, welche jeweils in Führungseinrichtungen geführt sind. In anderen Worten ist der erste Haspelträger in einer ersten Führungseinrichtung aufgenommen und geführt und ist der zweite Haspelträger in einer zweiten Führungseinrichtung aufgenommen und geführt. Die Führungseinrichtungen sind vorzugsweise als Führungsschienen ausgebildet. An dem ersten Haspelträger ist eine erste Haspel bzw. ein erstes Haspelrad und an dem zweiten Haspelträger ist eine zweite Haspel bzw. ein zweites Haspelrad angeordnet.

Erfindungsgemäß sind die erste und die zweite Haspel in einer Austrittsrichtung des Faserstrangs hintereinander positionierbar. Vorzugsweise sind die erste und die zweite Haspel somit beim Umlegen des Faserstrangs, insbesondere beim Haspelwechsel, in der Austrittsrichtung des Faserstrangs voneinander beabstandet, insbesondere vorbestimmte Positionen einnehmend, angeordnet. Wenn die beiden Haspeln bzw. Haspelräder in der Austrittsrichtung des Faserstrangs voneinander beabstandet angeordnet sind, das heißt unterschiedliche Entfernungen bzw. Abstände zu der Spinnanlage aufweisen, erleichtert dies das Umlegen des Faserstrangs, insbesondere wenn nahe aneinander liegende Führungseinrichtungen verwendet werden.

Grundsätzlich können die Führungseinrichtungen bzw. Führungsschienen beliebig ausgebildet sein. Beispielsweise können die Führungseinrichtungen bzw. Führungsschienen die Haspelträger sowohl auf einem kurvigen als auch auf einem geraden Weg führen. Grundsätzlich können die zumindest zwei Führungseinrichtungen bzw. Führungsschienen auch beliebig voneinander beabstandet sein, vorzugsweise sind sie jedoch zumindest abschnittsweise nahebei einer, von einer Austrittsrichtung des Faserstrangs aufgespannten, vertikalen Ebene verlaufend angeordnet. Ist dies der Fall, können die beiden Haspelträger und somit die daran gehaltenen Haspeln bzw. Haspelräder, wenn ein Haspelwechsel vonnöten ist, nämlich hintereinander nahe an der bzw. angrenzend an die vorgenannte Ebene, welche als Fadenstrangaustrittsebene bezeichnet werden kann, angeordnet werden. Dadurch wird ein direktes Umlegen des kontinuierlich aus der Spinneinrichtung austretenden Faserstrangs von dem einen Haspelrad auf das andere Haspelrad ermöglicht. Ein kontinuierliches Aufhaspeln von Faserbündeln wird damit erreicht.

Bevorzugt kann es ferner vorgesehen sein, die zwei Führungseinrichtung zumindest abschnittsweise nahe beieinander liegend/ aneinander angrenzend/ benachbart anzuordnen, um ein direktes Umlegen des Faserstrangs von der einen Haspel auf die andere Haspel zu ermöglichen bzw. zu vereinfachen.

Mit der vorliegenden Erfindung wird somit eine technisch einfach umsetzbare Haspelwechselvorrichtung bereitgestellt, welche ein direktes Umlegen eines kontinuierlich austretenden Faserstranges von einer Haspel auf die andere Haspel vorsieht. Es wird somit ein abwechselndes Aufwickeln auf die beiden Haspeln ermöglicht. Nach einem erfolgten Aufwickeln sind die Haspeln bevorzugt abwechselnd auswechselbar bzw. sind die aufgehaspelten (Hohl-)Faserbündel abnehmbar. Ein Abnehmen bzw. eine Ernte der (Hohl-)Faserbündel ist somit erfindungsgemäß in das Handling/ die Handhabung integriert. Insbesondere ist mit der erfindungsgemäßen Lösung während des Haspelwechsels kein Absaugen eines Faserstrangabfalls vonnöten, so dass wenig bis kein Faserstrangverlust entsteht. Die Haspelwechselvorrichtung kann zudem sowohl manuell als auch automatisiert betrieben werden. Dabei ist beim manuellen Betrieb nur ein Anwender bzw. Bediener erforderlich.

Es ist von Vorteil, wenn die Führungseinrichtungen als Linearführungen ausgebildet sind, welche insbesondere jeweils angrenzend an die Spinneinrichtung, sich von einer Faserstrangaustrittsseite der Spinneinrichtung, vorzugsweise horizontal, weg erstreckend und zumindest näherungsweise parallel zu der Austrittsrichtung des Faserstrangs angeordnet sind, und wobei die Haspelträger in den und entlang der Linearführungen linear beweglich sind.

Eine Ausbildung der Führungseinrichtungen bzw. Führungsschienen als Linearführungen stellt eine einfache, kostengünstige sowie platzsparende und damit auch bevorzugte Ausführungsform der erfindungsgemäßen Haspelwechselvorrichtung dar. Bevorzugt sind die Haspelträger somit linear von der Spinneinrichtung weg bzw. zu der Spinneinrichtung hin entlang der Linearführungen beweglich. Die Linearführungen sind bevorzugt horizontal angeordnet und befinden sich an der Seite der Spinneinrichtung, an welcher der Faserstrang austritt. Bevorzugt sind die Linearführungen zumindest näherungsweise parallel zu der Austrittsrichtung des Faserstrangs und über ihre gesamte Länge nahebei der von der Austrittsrichtung des Faserstrangs aufgespannten, vertikalen Ebene, verlaufend angeordnet. Unter zumindest näherungsweise parallel wird in der vorliegenden Erfindung ein Winkel zwischen Linearführung und Austrittsrichtung des Faserstrangs in einem Bereich von 0° bis 22,5° verstanden. Die von der Austrittsrichtung des Faserstrangs aufgespannte, vertikale Ebene verläuft vorzugsweise zwischen den beiden Linearführungen. In anderen Worten schneiden die Linearführungen bevorzugt die angesprochene Ebene nicht und sind auf verschiedenen Seiten der Ebene angeordnet. Die Haspelträger können an beliebigen, auch vorbestimmten, Positionen entlang der Linearführungen angeordnet werden.

Die Erfindung ist dadurch gekennzeichnet, dass der Faserstrang beim Haspelwechsel von einer an die Spinneinrichtung angenäherten Haspel zu einer von der Spinneinrichtung entfernten Haspel überführt wird.

Wird der Faserstrang in seiner Austrittsrichtung von der ersten Haspel, welche sich bevorzugt an einem axialen Ende der ersten Linearführung nahebei der Spinnanlage befindet, zu der zweiten Haspel, welche sich bevorzugt an einem von der Spinnanlage entfernten axialen Ende der zweiten Linearführung befindet, überführt, dann kann ein Umlegen des Faserstranges ohne Faserstrangpuffer erreicht werden. Entscheidend dafür sind insbesondere die Merkmale, dass die Haspeln beim Umlegen einen ausreichenden Abstand zueinander haben und das Umlegen in der Faserstrangaustrittsrichtung erfolgt. Die Linearführungen weisen somit bevorzugt eine vorbestimmte, ausreichende Länge auf, welche insbesondere mit einer Geschwindigkeit des Faseraustritts abgestimmt werden muss.

In vorteilhafter Weise erfolgt somit ein Auflegen des Faserstrangs auf eine Haspel in einer von der Spinneinrichtung entfernten Position des entsprechenden Haspelträgers und bewegt sich der Haspelträger entlang der Führungseinrichtung während eines Aufwickelns des Faserstrangs hin zu einer an die Spinneinrichtung angenäherte Position.

Damit wird erreicht, dass ein Auflegen des Faserstrangs an dem von der Spinnanlage entfernten axialen Ende der beiden Linearführungen erfolgt und ein Abklemmen bzw. Abschneiden des Faserstrangs von einer vollständig aufgewickelten Haspel an dem axialen Ende der Linearführungen erfolgt, welches sich nahebei der bzw. angenähert an die Spinnanlage befindet. Ein Umlegen des Faserstrangs ohne Faserstrangpuffer wird dadurch ermöglicht.

Es ist zweckmäßig, wenn die Haspelträger jeweils zumindest einen Führungsabschnitt und zumindest einen, die Haspeln, insbesondere rotatorisch, beweglich und auswechselbar aufnehmenden Halteabschnitt aufweisen, wobei die Halteabschnitte der beiden Haspelträger jeweils derart nach innen vorragend und aufeinander zuweisend ausgebildet sind, dass die Haspeln jeweils innenliegend an den Haspelträgern, insbesondere zur Verringerung eines Abstands der beiden Haspeln zueinander, angebracht sind.

Insbesondere sind die Haspelträger über ihren Führungsabschnitt in bzw. entlang der Linearführungen/ Führungsschienen/ Führungseinrichtungen geführt und darin aufgenommen. Die Haspeln bzw. Haspelräder sind lösbar, insbesondere formschlüssig oder kraftschlüssig an den Halteabschnitten der Haspelträger befestigt bzw. aufgenommen. Als vorteilhaft haben sich dabei einfach lösbare Verbindungen, welche durch Aufklipsen oder Einrasten von Einrastelementen erzeugt werden, herausgestellt. Die Halteabschnitte der beiden Haspelträger sind jeweils nach innen, zu der von der Austrittsrichtung des Faserstrangs aufgespannten vertikalen Ebene hin, ausgerichtet, so dass die Haspeln bzw. Haspelräder jeweils innenliegend, das heißt der vorgenannten Ebene zugewandt bzw. angenähert, an den Haspelträgern angebracht/ aufgesteckt/ befestigt sind. Dadurch wird ein Abstand zwischen den beiden Haspeln bzw. Haspelrädern weiter verringert bzw. die beiden Haspelräder näher an die von der Austrittsrichtung des Faserstrangs aufgespannte Ebene herangebracht. Es wird somit ein Umlegen des Faserstrangs von einer Haspel auf die andere Haspel weiter vereinfacht.

Die erfindungsgemäße Haspelwechselvorrichtung weist eine Steuerungseinrichtung auf, welche eine, vorzugsweises motorinduzierte, Drehbewegung und/oder Drehmoment der Haspeln und eine, vorzugsweise motorinduzierte, Bewegung der Haspelträger entlang der Führungseinrichtungen derart steuert, dass die Drehbewegung der Haspeln und die Bewegung der Haspelträger entlang der Führungseinrichtungen aufeinander abgestimmt sind und vorzugsweise ein (teil-) automatisierter Betrieb der Haspelwechselvorrichtung ermöglicht wird.

Neben einem manuellen Betrieb der erfindungsgemäßen Haspelwechselvorrichtung kann somit auch ein (teil-) automatisierter Betrieb derselben erfindungsgemäß vorgesehen sein. Dazu wird dann eine Steuerungseinrichtung mit einem bzw. ausgebildet durch einen Prozessor (CPU) benötigt. Die Steuerungseinrichtung der Haspelwechselvorrichtung kann integriert in die Spinneinrichtung oder als eine separate Einheit vorgesehen sein. Mit Hilfe der Steuerungseinrichtung kann ein Drehmotor, welcher sich in den Haspelträgern befindet, angesteuert und zum rotierenden Antreiben der Haspeln bzw. Haspelräder mit einer gewünschten Drehzahl bzw. einem gewünschten Drehmoment beaufschlagt werden. Um den Faserstrang kontinuierlich auf Spannung halten zu können, hat sich beispielsweise herausgestellt, dass es vorteilhaft ist, die Haspeln unabhängig von der Drehzahl mit einem definierten Drehmoment anzutreiben.

Außerdem kann durch die Steuerungseinrichtung ein (Linear-) Antriebsmotor angesteuert werden, welcher die Haspelträger entlang der Führungseinrichtungen/ Linearführungen, insbesondere translatorisch, antreiben/ bewegen kann. Bevorzugt sind die Drehbewegungen/ rotatorischen Bewegungen der Haspeln/ Haspelräder und die, insbesondere translatorischen, Bewegungen der Haspelträger und somit der Haspeln entlang der Führungseinrichtungen aufeinander abgestimmt, insbesondere synchronisiert. Durch dieses Abstimmen bzw. Synchronisieren der beiden Bewegungen wird ermöglicht, den Faserstrang beim Haspelwechsel kontinuierlich auf Spannung zu halten.

Es ist ferner zweckmäßig, wenn die Haspeln jeweils eine Faserstrangführeinrichtung, eine Klemmeinrichtung, eine Schneideinrichtung und Halteeinrichtungen für einen Faserstranganfang und ein Faserstrangende aufweisen.

Der kontinuierlich aus der Spinnanlage austretende Faserstrang kommt beim Auflegen bzw. Umlegen des Faserstrangs bevorzugt zunächst mit der Faserstrangführeinrichtung der Haspel in Kontakt und wird über diese einer Halteeinrichtung für den Faserstranganfang zugeführt. Sobald der Faserstrang an der Halteeinrichtung gehalten ist, kann ein Aufwickeln des Faserstrangs erfolgen. Ist der Faserstrang vollständig aufgewickelt, wird er über die Klemmeinrichtung abgeklemmt, mit der Schneideinrichtung abgeschnitten und das Faserstrangende von einer weiteren Halteeinrichtung gehalten.

Das anschließende Überführen des Faserstrangs von der einen Haspel auf die andere Haspel kann manuell durch einen Anwender erfolgen. In einem (teil-)automatisierten Betrieb der erfindungsgemäßen Haspelwechselvorrichtung kann auch ein Übergabegreifer vorgesehen sein, welcher den weiterhin kontinuierlich austretenden Faserstrang fasst bzw. greift und ihn der anderen, leeren Haspel zuführt. Denkbar ist auch, dass das Überführen bzw. Übergeben des Faserstrangs von einer Haspel auf die andere Haspel durch Ansaugen mittels eines Saugrohrs erfolgt oder unterstützt wird.

Außerdem betrifft die Erfindung ein Haspelwechselverfahren zum Aufhaspeln von Faserbündeln, insbesondere Hohlfaserbündeln, aus einem, vorzugsweise kontinuierlich, aus einer Spinneinrichtung/ Spinnanlage austretenden (Hohl-) Faserstrang, in einer Haspelwechselvorrichtung wie voranstehend beschrieben, mit den Schritten: Auflegen des Faserstrangs auf die erste der zumindest zwei Haspeln, deren Haspelträger sich vorzugsweise in einer von der Spinneinrichtung entfernten Position befindet; und Aufwickeln des Faserstrangs auf die entsprechende Haspel und insbesondere damit einhergehendes, gleichzeitiges Bewegen des entsprechenden Haspelträgers entlang der Führungseinrichtung hin zu einer an die Spinneinrichtung angenäherte Position.

In vorteilhafter Weise umfasst das Haspelwechselverfahren ferner die Schritte: Abklemmen und Abschneiden des an der ersten Haspel aufgewickelten Faserstrangs in einer an die Spinneinrichtung angenäherten Position des Haspelträgers; und Überführen des Faserstrangs auf die zweite der zumindest zwei Haspeln, deren Haspelträger sich in einer von der Spinneinrichtung entfernten Position befindet.

Es ist zweckmäßig, wenn das Haspelwechselverfahren außerdem die folgenden Schritte aufweist: Verbringen des sich in der an die Spinneinrichtung angenäherten Position befindlichen Haspelträgers in die von der Spinneinrichtung entfernte Position; und Ersetzen der vollen, vollständig aufgewickelten Haspel, durch eine leere Haspel oder direktes Abnehmen des aufgewickelten Faserbündels.

Das erfindungsgemäße Verfahren ermöglicht das bereits voranstehend beschriebene direkte Umlegen des kontinuierlich austretenden Faserstrangs von einer Haspel auf die andere Haspel und zwar ohne dass ein Faserstrangpuffer vonnöten ist. Die voranstehenden Beschreibungen bzw. Ausführungen zu der erfindungsgemäßen Haspelwechselvorrichtung sind analog auf das Haspelwechselverfahren gemäß der vorliegenden Erfindung anwendbar.

Mit anderen Worten wird durch die vorliegende Erfindung somit ein einfacher, insbesondere einfach handhabbarer, und effektiver Haspelwechsel ermöglicht, mit welchem eine Herstellung von (Hohl-)Faserbündeln aus einem kontinuierlich gelieferten Faserstrang verbessert wird. Diese Verbesserung wird insbesondere dadurch erreicht, dass der kontinuierlich produzierte Faserstrang direkt von einer Haspel auf die andere Haspel umgelegt werden und immer auf Spannung gehalten werden kann. Dabei kann eine Haspel abgenommen bzw. ausgetaucht bzw. ein aufgewickeltes Faserbündel geerntet werden, während die andere Haspel den Faserstrang aufwickelt.

Die Erfindung wird nachfolgend mit Hilfe von Figuren weiter erläutert. Es zeigen:
- Fig. 1: eine erste Ausführungsform einer erfindungsgemäßen Haspelwechselvorrichtung; und
- Fig. 2: eine zweite Ausführungsform einer erfindungsgemäßen Haspelwechselvorrichtung.

Die Figuren sind lediglich schematischer Natur und dienen ausschließlich dem Verständnis der Erfindung. Gleiche Elemente sind dabei mit denselben Bezugszeichen versehen. Die Merkmale der einzelnen Ausführungsformen bzw. Ausführungsbeispiele können untereinander ausgetauscht werden.

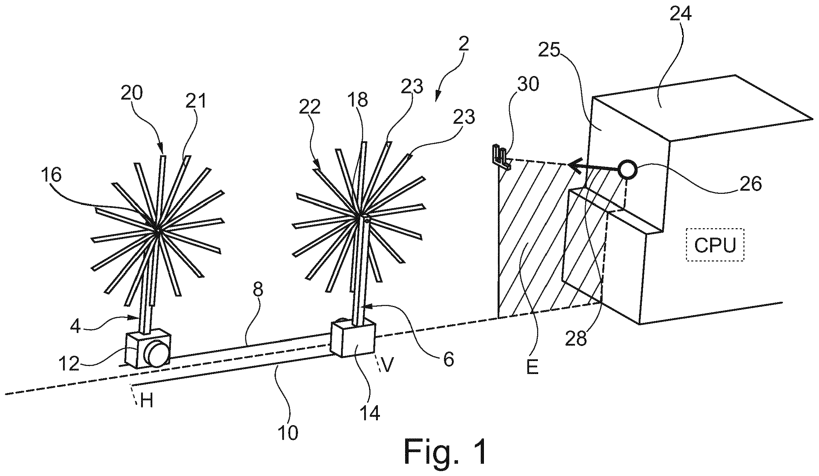

In Fig. 1 ist eine erste Ausführungsform einer Haspelwechselvorrichtung 2 gezeigt. Die Haspelwechselvorrichtung 2 weist zwei Haspelträger 4, 6, nämlich einen ersten Haspelträger 4 und einen zweiten Haspelträger 6 auf. Der erste Haspelträger 4 ist in einer ersten Linearführung 8 aufgenommen und geführt. Der zweite Haspelträger 6 ist in einer zweiten Linearführung 10 aufgenommen und geführt. Die Linearführungen 8, 10 befinden sich am Boden. Die Haspelträger 4, 6 erstrecken sich senkrecht von den Linearführungen 8, 10 und somit von dem Boden weg. Insbesondere weisen die Haspelträger 4, 6 Führungsabschnitte 12, 14 auf, über welche die Haspelträger 4, 6 linear beweglich in den Linearführungen 8, 10 geführt sind.

Die Haspelträger 4, 6 weisen jeweils Halteabschnitte 16, 18 in Form von Haltebolzen auf. An dem Halteabschnitt 16 des ersten Haspelträgers 4 ist ein erstes Haspelrad 20 lösbar bzw. auswechselbar angebracht/ befestigt. An dem Halteabschnitt 18 des zweiten Haspelträgers 6 ist ein zweites Haspelrad 22 lösbar bzw. auswechselbar angebracht/ befestigt. Die Haspelräder 20, 22 können jeweils nicht dargestellte Faserstrangführeinrichtungen, Klemmeinrichtungen, Schneideinrichtungen sowie Halteeinrichtungen für einen Faserstranganfang und ein Faserstrangende aufweisen. Die Haspelräder 20, 22 weisen jeweils 16 in Umfangsrichtung gleichmäßig voneinander beabstandete und sich in radialer Richtung erstreckende Arme 21, 23 auf.

Aus einer Spinnanlage 24 ist an einer Faserstrangaustrittsseite 25 eine Faserstrangaustrittsöffnung 26 vorgesehen, aus welcher ein Faserstrang in einer Faserstrangaustrittsrichtung 28 kontinuierlich mit einer vorbestimmten Geschwindigkeit zu einer Faserstrangführeinrichtung 30 hin austritt. Durch die Faserstrangaustrittsrichtung 28 wird eine vertikale Ebene E, welche in Fig. 1 angedeutet ist, aufgespannt. Es können auch den Haspelrädern 20, 22 vorgeschaltete und in Fig. 1 nicht dargestellte Klemmeinrichtungen, Schneideinrichtungen sowie Halteeinrichtungen vorgesehen sein.

Die Linearführungen 8, 10 sind parallel zu der Ebene E angeordnet. An jeder Seite der Ebene E befindet sich eine der Linearführungen 8, 10. Die Linearführungen 8, 10 und somit die Haspelträger 4, 6 weisen einen äußerst geringen Abstand zu der Ebene E und somit auch zueinander auf. Insbesondere ist ein geringstmöglicher seitlicher Abstand zwischen den Linearführungen 8, 10 und somit zwischen den Haspelträgern 4, 6 vorgesehen.

Die Halteabschnitte 16, 18 der Haspelträger 4, 6 weisen jeweils zu der Ebene E senkrecht hin. In anderen Worten sind die an den Halteabschnitten 16, 18 befestigten Haspelräder 20, 22 innenliegend an den Haspelträgern 4, 6 angeordnet. Dadurch kann ein Abstand der beiden Haspelräder 20, 22 noch weiter verringert werden. Die Haspelräder 20, 22 tangieren in anderen Worten beinahe die Ebene E und sind von dieser jeweils minimal beabstandet.

Im Betrieb wird der kontinuierlich austretende Faserstrang auf das erste Haspelrad 20 aufgelegt, deren Haspelträger 4 sich an einer von der Spinnanlage 24 entfernten, hinteren Position H an der Linearführung 8 befindet. Anschließend erfolgt ein Aufwickeln des Faserstrangs an dem Haspelrad 20. Gleichzeitig zu dem Aufwickeln bewegt sich der Haspelträger 4 zu einer an die Spinnanlage 24 angenäherte, vordere Position V hin und bewegt sich der Haspelträger 6 zu einer von der Spinnanlage 24 entfernten, hinteren Position H an der Linearführung 10 hin. Sobald das Haspelrad 20 vollständig aufgewickelt ist, was beispielsweise durch eine nicht dargestellte Umdrehungszähleinrichtung bestimmt werden kann, wird der Faserstrang durch die nicht dargestellte Klemmeinrichtung an dem Haspelrad 20 abgeklemmt und durch die nicht dargestellte Schneideinrichtung abgeschnitten.

Der Faserstrang wird nun direkt auf das sich nun an der hinteren Position H befindliche Haspelrad 22 umgelegt und es erfolgt ein Aufwickeln des weiterhin kontinuierlich austretenden Faserstrangs auf das Haspelrad 22. Dadurch, dass das Umlegen des Faserstrangs von einer vorderen Position V auf eine hintere Position H und somit in Faserstrangaustrittsrichtung 28 erfolgt, kann die Spannung des Faserstrangs beim Umlegen von dem Haspelrad 20 auf das Haspelrad 22 gehalten werden. Das Haspelrad 22 wird nun aufgewickelt und dabei auch langsam von der hinteren Position H zu einer vorderen Position V hin bewegt. Gleichzeitig wird das volle Haspelrad 20 von der vorderen Position V zu der hinteren Position H hin bewegt. Dann liegt wieder die in Fig. 1 gezeigte Konfiguration vor. Befindet sich das volle Haspelrad 20 an der hinteren Position H, kann das Haspelrad 20 durch ein leeres Haspelrad ersetzt werden oder kann das aufgewickelte Faserbündel abgenommen bzw. geerntet werden. Das Ersetzen eines vollen Haspelrads 20 bzw. das Abnehmen des aufgewickelten Faserbündels erfolgt somit synchron zum Aufwickeln des Faserstrangs an dem Haspelrad 22. Der dargestellte Prozess wiederholt sich dabei kontinuierlich und kann manuell durch einen Anwender oder automatisiert erfolgen.

Im automatisierten Betrieb ist eine Steuerung mit einer CPU (gestrichelt angedeutet) vorgesehen. Über die Steuerung können eine Drehbewegung der Haspelräder 20, 22 sowie eine horizontale Bewegung der Haspelträger 4, 6 beliebig gesteuert und aufeinander abgestimmt werden. Bedarfsweise können sowohl die Drehbewegung der Haspelräder 20, 22 als auch die horizontale Bewegung der Haspelträger 4, 6 verlangsamt, beschleunigt oder gestoppt werden. Es kann beispielsweise eine Steuerung vorgesehen sein, welche den Faserstrang auch dann auf Spannung hält, wenn die Drehbewegung der Haspelräder 20, 22 für das Umlegen des Faserstranges komplett gestoppt wird. Dies wird zum Beispiel durch eine geeignete Bewegung der Haspelträger 4, 6 oder, sobald der Faserstrang umgelegt ist, durch eine kurzzeitig schnellere Drehbewegung der Haspelräder 20, 22 erreicht.

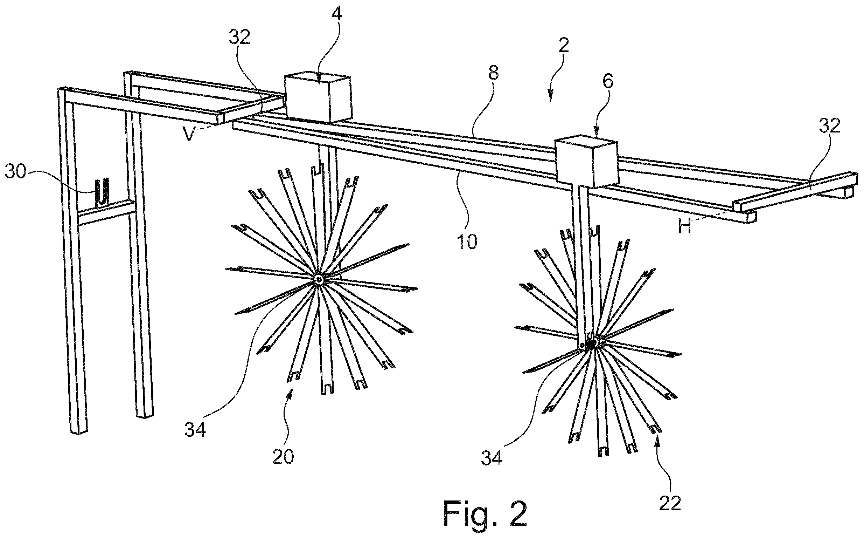

Fig. 2 zeigt eine zweite Ausführungsform einer Haspelwechselvorrichtung 2. Es wird nachfolgend hauptsächlich auf die Unterschiede zu der ersten Ausführungsform eingegangen. Die Linearführungen 8, 10 sind in Fig. 2 nicht am Boden, sondern in einer erhöhten Position vorgesehen. Außerdem sind die Linearführungen 8, 10 der Fig. 2 nicht parallel, sondern lediglich näherungsweise parallel ausgebildet und schließen einen spitzen Winkel ein. Haspelträger 4, 6 sind an den Linearführungen 8, 10 geführt und erstrecken sich von den Linearführungen 8, 10 senkrecht nach unten. An den Haspelträgern 4, 6 sind Haspelräder 20, 22 auswechselbar und beweglich angebracht. Die Haspelträger 4, 6 sind zwischen einer vorderen Position V und einer hinteren Position H entlang der Linearführungen 8, 10 bewegbar. Sowohl an der vorderen Position V als auch an der hinteren Position H sind Anschläge 32 vorgesehen.

In der zweiten Ausführungsform wird der kontinuierlich aus der (nicht dargestellten) Spinnanlage austretende Faserstrang zunächst der Faserstrangführeinrichtung 30 zugeführt. Von dort wird der Faserstrang zuerst auf das erste Haspelrad 20 aufgelegt und aufgewickelt. Sobald das erste Haspelrad 20 vollständig aufgewickelt ist, wird der Faserstrang von einem Anwender bzw. Bediener manuell an dem Haspelrad 20 abgeklemmt und abgeschnitten. Anschließend wird der Faserstrang manuell zu dem zweiten Haspelrad 22 geführt, welches sich nahe der hinteren Position H befindet. Es folgt ein Auflegen des Faserstrangs auf das zweite Haspelrad 22. Während das zweite Haspelrad 22 nun den Faserstrang aufwickelt, wird es langsam zu der vorderen Position V hin, also in Fig. 2 nach links, bewegt. Das volle bzw. vollständig aufgewickelte Haspelrad 20 wird manuell zu der hinteren Position H hin, also in Fig. 2 nach rechts bewegt bzw. geschoben. Es folgt ein Abnehmen des an dem Haspelrad 20 aufgewickelten Faserbündels. Dieser Vorgang wiederholt sich bei jedem Haspelwechsel.

In der Ausführungsform der Fig. 2 werden die Haspelräder 20, 22 jeweils mit einem definierten Drehmoment durch einen Haspelradantrieb 34 angetrieben. Dadurch kann der Faserstrang gleichmäßig auf Spannung gehalten werden. Der Haspelradantrieb kann zum Abnehmen bzw. Ernten der aufgewickelten Faserbündel gestoppt werden. Die Umdrehungen der Haspelräder 20, 22 können mittels einer nicht dargestellten Umdrehungszähleinrichtung erfasst werden. Ein Anwender bzw. Bediener kann somit beispielsweise auf einen bevorstehenden Haspelwechsel hingewiesen werden. Das horizontale Verschieben der Haspelträger 4, 6 entlang der Linearführungen 8, 10 erfolgt manuell durch den Bediener/ Anwender.

### Bezugszeichenliste

- 2: Haspelwechselvorrichtung
- 4: erster Haspelträger
- 6: zweiter Haspelträger
- 8: erste Linearführung
- 10: zweite Linearführung
- 12: Führungsabschnitt (erster Haspelträger)
- 14: Führungsabschnitt (zweiter Haspelträger)
- 16: Halteabschnitt (erster Haspelträger)
- 18: Halteabschnitt (zweiter Haspelträger)
- 20: erstes Haspelrad
- 21: Haspelarm (erstes Haspelrad)
- 22: zweites Haspelrad
- 23: Haspelarm (zweites Haspelrad)
- 24: Spinnanlage
- 25: Faserstrangaustrittsseite
- 26: Faserstrangaustrittsöffnung
- 28: Faserstrangaustrittsrichtung
- 30: Faserstrangführeinrichtung
- 32: Anschlag
- 34: Haspelradantrieb

## Patentansprüche

1. Haspelwechselvorrichtung (2), welche zum Aufhaspeln von Faserbündeln aus einem aus einer Spinneinrichtung (24) austretenden Faserstrang vorgesehen ist, mit zumindest einem ersten und einem zweiten Haspelträger (4, 6), an welche jeweils eine zum Aufwickeln des Faserstrangs geeignete Haspel (20, 22) angeordnet ist und welche in zumindest einer ersten und einer zweiten Führungseinrichtung (8, 10) verschiebbar aufgenommen und geführt sind, so dass die beiden Haspeln in einer Austrittsrichtung des Faserstrangs hintereinander positionierbar sind, um bei einem Haspelwechsel ein direktes Umlegen des Faserstrangs von der ersten, an dem ersten Haspelträger (4, 6) angeordneten, Haspel (20, 22) auf die zweite, an dem zweiten Haspelträger (4, 6) angeordneten, Haspel (20, 22) zu ermöglichen, **dadurch gekennzeichnet, dass** die Haspelwechselvorrichtung (2) eine Steuerungseinrichtung aufweist, welche eine, vorzugsweises motorinduzierte, Drehbewegung und/oder Drehmoment der Haspeln (20, 22) und eine, vorzugsweise motorinduzierte, Bewegung der Haspelträger (4, 6) entlang der Führungseinrichtungen (8, 10) derart steuert, dass die Drehbewegung der Haspeln (20, 22) und die Bewegung der Haspelträger (4, 6) entlang der Führungseinrichtungen (8, 10) aufeinander abgestimmt sind und vorzugsweise ein (teil-) automatisierter Betrieb der Haspelwechselvorrichtung (2) ermöglicht wird, und dass der Faserstrang beim Haspelwechsel von einer an die Spinneinrichtung (24) angenäherten Haspel (20, 22) zu einer von der Spinneinrichtung (24) entfernten Haspel (20, 22) überführt wird.

2. Haspelwechselvorrichtung (2) nach Anspruch 1, **dadurch gekennzeichnet, dass** die Führungseinrichtungen als Linearführungen (8, 10) ausgebildet sind, welche jeweils angrenzend an die Spinneinrichtung (24), sich von einer Faserstrangaustrittsseite (25) der Spinneinrichtung (24), vorzugsweise horizontal, weg erstreckend und zumindest näherungsweise parallel zu der Austrittsrichtung (28) des Faserstrangs angeordnet sind, und wobei die Haspelträger (4, 6) in den und entlang der Linearführungen (8, 10) linear beweglich sind.

3. Haspelwechselvorrichtung (2) nach Anspruch 1 oder 2, **dadurch gekennzeichnet, dass** ein Auflegen des Faserstrangs auf eine Haspel (20, 22) in einer von der Spinneinrichtung (24) entfernten Position des entsprechenden Haspelträgers (4, 6) erfolgt und sich der Haspelträger (4, 6) entlang der Führungseinrichtung (8, 10) während eines Aufwickelns des Faserstrangs hin zu einer an die Spinneinrichtung (24) angenäherte Position bewegt.

4. Haspelwechselvorrichtung (2) nach einem der vorherigen Ansprüche, **dadurch gekennzeichnet, dass** die Haspelträger (4, 6) jeweils zumindest einen Führungsabschnitt (12, 14) und zumindest einen, die Haspeln (20, 22) beweglich und auswechselbar aufnehmenden Halteabschnitt (16, 18) aufweisen, wobei die Halteabschnitte (16, 18) der beiden Haspelträger (4, 6) jeweils derart nach innen vorragend und aufeinander zuweisend ausgebildet sind, dass die Haspeln (20, 22) jeweils innenliegend an den Haspelträgern (4, 6) angebracht sind.

5. Haspelwechselvorrichtung (2) nach einem der vorhergehenden Ansprüche, **dadurch gekennzeichnet, dass** die Haspeln (20, 22) jeweils eine Faserstrangführeinrichtung, eine Klemmeinrichtung, eine Schneideinrichtung und Halteeinrichtungen für einen Faserstranganfang und ein Faserstrangende aufweisen.

6. Haspelwechselverfahren zum Aufhaspeln von Faserbündeln aus einem aus einer Spinneinrichtung (24) austretenden Faserstrang, in einer Haspelwechselvorrichtung (2) nach einem der vorhergehenden Ansprüche, mit den Schritten:
Auflegen des Faserstrangs auf die erste der zumindest zwei Haspeln (20, 22), deren Haspelträger (4, 6) sich in einer von der Spinneinrichtung (24) entfernten Position befindet; und
Aufwickeln des Faserstrangs auf die entsprechende Haspel (20, 22) und Bewegen des entsprechenden Haspelträgers (4, 6) entlang der Führungseinrichtung (8, 10) in eine an die Spinneinrichtung (24) angenäherte Position.

7. Haspelwechselverfahren nach Anspruch 6, ferner mit den Schritten:
Abklemmen und Abschneiden des an der ersten Haspel (20, 22) aufgewickelten Faserstrangs in einer an die Spinneinrichtung (24) angenäherten Position des Haspelträgers (4, 6); und
Überführen des Faserstrangs auf die zweite der zumindest zwei Haspeln (20, 22), deren Haspelträger (4, 6) sich in einer von der Spinneinrichtung (24) entfernten Position befindet.

8. Haspelwechselverfahren nach Anspruch 7, ferner mit den Schritten:
Verbringen des sich in der an die Spinneinrichtung (24) angenäherten Position befindlichen Haspelträgers (4, 6) in die von der Spinneinrichtung (24) entfernte Position; und
Ersetzen der vollen, vollständig aufgewickelten Haspel (20, 22), durch eine leere Haspel oder direktes Abnehmen des aufgewickelten Faserstrangs.

## Claims

1. A reel changing device (2) which is provided for reeling fiber bundles from a fiber strand exiting a spinning device (24), comprising at least a first reel carrier (4, 6) and a second reel carrier (4, 6) on each of which a reel (20, 22) suited for winding the fiber strand is arranged and which are movably received and guided in at least a first guide means (8, 10) and a second guide means (8, 10) so that the two reels can be positioned one after another in an exit direction of the fiber strand so as to enable, in the case of a reel change, the fiber strand to be directly transferred from the first reel (20, 22) arranged on the first reel carrier (4, 6) to the second reel (20, 22) arranged on the second reel carrier (4, 6), **characterized in that** the reel changing device (2) comprises a control device which controls a, preferably engine-induced, rotational movement and/or torque of the reels (20, 22) and a, prefereably engine-induced, movement of the reel carriers (4, 6) along the guide means (8, 10) so that the rotational movement of the reels (20, 22) and the movement of the reel carriers (4, 6) along the guide means (8, 10) are adjusted to each other and preferably a (partially) automated operation of the reel changing device (2) is enabled and that during the reel change the fiber strand is transferred from a reel (20, 22) close to the spinning device (24) to a reel (20, 22) distant from the spinning device (24).

2. The reel changing device (2) according to claim 1, **characterized in that** the guide means are formed as linear guides (8, 10) each of which is arranged adjacent to the spinning device (24), extending, preferably horizontally, away from a fiber strand exit side (25) of the spinning device (24) and arranged at least approximately in parallel to the exit direction (28) of the fiber strand, and wherein the reel carriers (4, 6) are linearly movable within and along the linear guides (8, 10).

3. The reel changing device (2) according to claim 1 or 2, **characterized in that** the fiber strand is put onto a reel (20, 22) at a position of the respective reel carrier (4, 6) distant from the spinning device (24) and the reel carrier (4, 6) moves along the guide means (8, 10) during a winding up the fiber strand toward a position close to the spinning device (24).

4. The reel changing device (2) according to one of the preceding claims, **characterized in that** each of the reel carriers (4, 6) comprises at least a guide portion (12, 14) and at least a holding portion (16, 18) movably and replaceably receiving the reels (20, 22), wherein each of the holding portions (16, 18) of the two reel carriers (4, 6) is formed to be inwardly protruding and pointing toward each other such that the reels (20, 22) are arranged on an interior side of the respective reel carriers (4, 6).

5. The reel changing device (2) according to one of the preceding claims, **characterized in that** the reels (20, 22) each have a fiber strand guide means, a clamping means, a cutting means and holding means for a fiber strand start and a fiber strand end.

6. A reel changing method for reeling fiber bundles from a fiber strand exiting a spinning device (24) in a reel changing device (2) according to one of the preceding claims, comprising the steps of:
placing the fiber strand onto the first one of the at least two reels (20, 22) whose reel carrier (4, 6) is provided at a position distant from the spinning device (24); and
winding the fiber strand onto the respective reel (20, 22) and moving the respective reel carrier (4, 6) along the guide means (8, 10) into a position close to the spinning device (24).

7. The reel changing method according to claim 6, further comprising the steps of:
pinching off and cutting off the fiber strand wound up on the first reel (20, 22) at a position of the reel carrier (4, 6) close to the spinning device (24); and
transferring the fiber strand to the second one of the at least two reels (20, 22) whose reel carrier (4, 6) is provided at a position distant from the spinning device (24).

8. The reel changing method according to claim 7, further comprising the steps of:
moving the reel carrier (4, 6) provided at the position close to the spinning device (24) to the position distant from the spinning device (24); and
replacing the filled, completely wound reel (20, 22) with an empty reel or directly removing the wound-up fiber strand.

## Revendications

1. Dispositif de changement de dévidoir (2) qui est prévu pour le dévidement de faisceaux de fibre d'un brin de fibre sortant d'un dispositif de filage (24), avec au moins un premier et un second support de dévidoir (4, 6), au niveau desquels est agencé respectivement un dévidoir (20, 22) approprié à l'enroulement du brin de fibre et qui sont logés et guidés de manière mobile dans au moins un premier et un second dispositif de guidage (8, 10) de sorte que les deux dévidoirs puissent être positionnés dans un sens de sortie du brin de fibre l'un derrière l'autre afin de permettre pour un changement de dévidoir un pliage direct du brin de fibre du premier dévidoir (20, 22) agencé au niveau du premier support de dévidoir (4, 6) au second dévidoir (20, 22) agencé au niveau du second support de dévidoir (4, 6), **caractérisé en ce que** le dispositif de changement de dévidoir (2) présente un dispositif de commande qui commande un mouvement de rotation et/ou couple de préférence induit par moteur des dévidoirs (20, 22) et un mouvement de préférence induit par moteur des supports de dévidoir (4, 6) le long des dispositifs de guidage (8, 10) de telle manière que le mouvement de rotation des dévidoirs (20, 22) et le mouvement des supports de dévidoir (4, 6) soient adaptés l'un à l'autre le long des dispositifs de guidage (8, 10) et de préférence un fonctionnement (partiellement) automatisé du dispositif de changement de dévidoir (2) soit permis, et que le brin de fibre est transféré lors du changement de dévidoir d'un dévidoir (20, 22) approché du dispositif de filage (24) à un dévidoir (20, 22) éloigné du dispositif de filage (24).

2. Dispositif de changement de dévidoir (2) selon la revendication 1, **caractérisé en ce que** les dispositifs de guidage sont réalisés comme des guidages linéaires (8, 10) qui sont agencés de manière respectivement contigüe au dispositif de filage (24), s'étendant loin d'un côté de sortie de brin de fibre (25) du dispositif de filage (24), de préférence horizontalement et au moins approximativement parallèlement au sens de sortie (28) du brin de fibre, et dans lequel les supports de dévidoir (4, 6) sont mobiles linéairement dans les ou le long des guidages linéaires (8, 10).

3. Dispositif de changement de dévidoir (2) selon la revendication 1 ou 2, **caractérisé en ce qu'**un placement du brin de fibre sur un dévidoir (20, 22) est effectué dans une position éloignée du dispositif de filage (24) du support de dévidoir (4, 6) correspondant et le support de dévidoir (4, 6) se déplace le long du dispositif de guidage (8, 10) pendant un enroulement du brin de fibre vers une position approchée du dispositif de filage (24).

4. Dispositif de changement de dévidoir (2) selon l'une des revendications précédentes, **caractérisé en ce que** les supports de dévidoir (4, 6) présentent respectivement au moins une section de guidage (12, 14) et au moins une section de retenue (16, 18) recevant de manière mobile et interchangeable les dévidoirs (20, 22), dans lequel les sections de retenue (16, 18) des deux supports de dévidoir (4, 6) sont réalisées respectivement dépassant vers l'intérieur et tournées l'une vers l'autre de telle manière que les dévidoirs (20, 22) soient montés respectivement à l'intérieur au niveau des supports de dévidoir (4, 6).

5. Dispositif de changement de dévidoir (2) selon l'une des revendications précédentes, **caractérisé en ce que** les dévidoirs (20, 22) présentent respectivement un dispositif de guidage de brin de fibre, un dispositif de serrage, un dispositif de coupe et des dispositifs de retenue pour un début de brin de fibre et une fin de brin de fibre.

6. Procédé de changement de dévidoir pour le dévidement de faisceaux de fibre d'un brin de fibre sortant d'un dispositif de filage (24), dans un dispositif de changement de dévidoir (2) selon l'une des revendications précédentes, avec les étapes :
le placement du brin de fibre sur le premier des au moins deux dévidoirs (20, 22), dont le support de dévidoir (4, 6) se trouve dans une position retirée du dispositif de filage (24) ; et
l'enroulement du brin de fibre sur les dévidoirs (20, 22) correspondants et le déplacement du support de dévidoir (4, 6) correspondant le long du dispositif de guidage (8, 10) dans une position approchée du dispositif de filage (24).

7. Procédé de changement de dévidoir selon la revendication 6, de plus avec les étapes :
l'obturation et la découpe du brin de fibre enroulé sur le premier dévidoir (20, 22) dans une position approchée du dispositif de filage (24) du support de dévidoir (4, 6) ; et
le transfert du brin de fibre au second des au moins deux dévidoirs (20, 22), dont le support de dévidoirs (4, 6) se trouve dans une position éloignée du dispositif de filage (24).

8. Procédé de changement de dévidoir selon la revendication 7, de plus avec les étapes :
l'amenée du support de dévidoir (4, 6) se trouvant dans la position approchée du dispositif de filage (24) dans la position retirée du dispositif de filage (24) ; et
le remplacement des dévidoirs (20, 22) pleins enroulés complètement par un dévidoir vide ou le retrait direct du brin de fibre enroulé.
